# EUROPÄISCHE PATENTSCHRIFT

(11) **EP 0 498 286 B1**
(45) Veröffentlichungstag und Bekanntmachung des Hinweises auf die Patenterteilung: **11.01.1995**
(21) Anmeldenummer: 92101434.6
(22) Anmeldetag: 29.01.1992
(51) Int. Cl.: C23C 24/10, B29C 45/60, C23C 26/02

(54) **Verfahren zur Erzeugung einer verschleissmindernden Schicht**
Process for manufacturing a wear-resistant coating
Procédé de réalisation d'une couche plus résistante à l'usure

(30) Priorität: 02.02.1991 DE 4103179; 02.02.1991 DE 4103180
(43) Veröffentlichungstag der Anmeldung: 12.08.1992
(73) Patentinhaber: FRIEDRICH THEYSOHN GmbH, D-30853 Langenhagen (DE)
(72) Erfinder: Psiuk, Werner, W-3000 Hannover 61 (DE); Reuter, Michael, Dr. Ing., W-3300 Braunschweig (DE)
(74) Vertreter: Döring, Roger, Dipl.-Ing.

(56) Entgegenhaltungen:
- WO-A-91/14799
- DE-A- 2 501 370
- DE-A- 3 718 779
- DE-A- 3 740 916
- FR-A- 2 452 528
- JP-A- 6 118 641
- US-A- 4 182 299
- PATENT ABSTRACTS OF JAPAN vol. 41, (M)24. November 1978 & JP-A-53112595
- PATENT ABSTRACTS OF JAPAN vol. 11, no. 8 (C-396)(2455) 9. Januar 1987 & JP-A-61186421
- LASER PRAXIS (1990) LS101-LS106
- CA106(12):88538x

## Beschreibung

Die Erfindung bezieht sich auf ein Verfahren zur Erzeugung einer verschleißmindernden Schicht auf der Oberfläche einer in einer Plastifiziervorrichtung einsetzbaren Schnecke, mit welchem auf den aus Stahl bestehenden Grundkörper der Schnecke ein aus Molybdän bestehendes oder Molybdän enthaltendes Beschichtungsmaterial aufgetragen und unter Wärmeeinwirkung fest mit demselben verbunden wird und mit welchem die beschichtete Schnecke anschließend abgekühlt wird (DE-OS 37 40 916).

Plastifiziervorrichtungen sind beispielsweise Extruder, Spritzgießmaschinen oder Compounder. Stellvertretend für alle möglichen Ausführungsformen wird im folgenden die Bezeichnung "Extruder" verwendet. Extruder werden beispielsweise zur Herstellung von Formteilen aus Kunststoff oder aus Gummi eingesetzt. Sie bestehen im wesentlichen aus einem Schneckengehäuse und mindestens einer drehbar in demselben angebrachten Schnecke, durch welche das zu verarbeitende Material im Schneckengehäuse gefördert wird. Durch die Drehung der Schnecke und den dadurch hervorgerufenen Strom von zu verarbeitendem Material sind sowohl die Stegflanken und die Stegoberflächen der Schnecken als auch der Schneckenkern einem ständigen Verschleiß ausgesetzt. Zusätzlich kommt es zu direktem Kontakt zwischen den Stegoberflächen und der Wandung des Schneckengehäuses. Um ein Fressen zwischen diesen Teilen zu vermeiden, sind gute Notlaufeigenschaften derselben erforderlich. Dazu werden in üblicher Technik die Stegoberflächen der Schnecken mit einem geeigneten Material überzogen.

Ein derartiges Material ist Molybdän. Es wird gemäß der JP-OS 61-139682 ebenso wie andere in dieser Druckschrift erwähnte Materialien beispielsweise in Pulverform auf einen aus Stahl bestehenden Grundkörper aufgebracht und anschließend mit Laserlicht bestrahlt. Damit die so erzeugte Schicht fest genug am Grundkörper haftet, werden vor dem Aufbringen des Pulvers Vertiefungen in der zu beschichtenden Oberfläche erzeugt. Dieses bekannte Verfahren ist also bereits bei der Vorbereitung des zu beschichtenden Grundkörpers aufwendig. Hinzu kommt, daß wegen des gegenüber Stahl wesentlich höheren Schmelzpunktes des Molybdäns eine reltiv hohe Wärmeenergie in den Grundkörper eingebracht wird, die zu ungünstigen Eigenspannungszuständen mit Verzug und Rißbildung führen kann.

Nach der CH-PS 576 526 wird auf die Stegoberflächen einer Extruderschnecke eine aus Molybdän bestehende Schicht durch Flammspritzen aufgebracht. Dieses Verfahren führt jedoch gemäß der DE-PS 37 18 779 zu keinem brauchbaren Ergebnis, weil nach der Lehre dieser Druckschrift eine Schicht mit zu hohem Molybdängehalt nur ungenügend auf dem Grundkörper der Schnecke haftet und leicht zum Absplittern neigt. Bei dem bekannten Verfahren nach der DE-PS 37 18 779 wird daher als Material für die verschleißmindernde Schicht eine Legierung verwendet, die zwischen 40 % und 70 % Molybdän enthält. Diese Legierung wird außerdem durch ein spezielles Verfahren, nämlich das Plasma-Pulver-Auftragsschweißen, auf den Grundkörper aufgebracht. Das bekannte Verfahren führt nur bei Einsatz des apparativ aufwendigen Plasma-Pulver-Auftragsschweißens zu brauchbaren Ergebnissen. Weiterhin werden Legierungen eingesetzt, deren Molybdängehalt maximal bei 70 % liegt. Die vorteilhaften Eigenschaften des Molybdäns, insbesondere die guten Notlaufeigenschaften, können daher nur mit Einschränkungen ausgenutzt werden. Auch bei diesem Verfahren wird außerdem eine relativ hohe Wärmeenergie in den Grundkörper eingebracht, die wieder zu ungünstigen Eigenspannungszuständen mit Verzug und Rißbildung führen kann.

Die Auffassung, daß hohe Molybdänanteile eines in Form von Pulver vorliegenden Beschichtungsmaterials beim Schweißen problematisch sind, geht auch aus der eingangs erwähnten DE-OS 37 40 916 hervor. Nach der Lehre dieser Druckschrift kann der Gefahr von Rißbildung bei der Erzeugung der verschleißmindernden Schicht aus einem Pulver heraus nur durch Herabsetzen des Molybdängehalts im Beschichtungsmaterial begegnet werden. Mit diesem bekannten Verfahren wird die Schutzschicht daher durch thermisches Spritzen auf den Grundkörper aufgebracht und in einer Zusatzbehandlung durch einen Laserstrahl in das Material des Grundkörpers eingeschmolzen. Das verwendete Beschichtungsmaterial kann Molybdän oder eine überwiegend Molybdän enthaltende Legierung sein. Auch bei diesem zweistufig arbeitenden Verfahren wird bereits durch das thermische Spritzen eine relativ hohe Wärmeenergie in den Grundkörper eingebracht. Auch hier können sich daher ungünstige Eigenspannungszustände mit Verzug und Rißbildung ergeben.

Der Erfindung liegt die Aufgabe zugrunde, das eingangs geschilderte Verfahren so weiterzubilden, daß eine die verschleißmindernden Eigenschaften von Molybdän ausnutzende, festhaftende Schicht auf den aus Stahl bestehenden Grundkörper einer Schnecke so aufgebracht werden kann, daß Verzug und Rißbildung im fertigen Bauteil ausgeschlossen werden können.

Diese Aufgabe wird gemäß der Erfindung dadurch gelöst, daß das mindestens 71 % Molybdän enthaltende Beschichtungsmaterial in einen Laserstrahl eingebracht, in demselben zeitlich und räumlich vom Material des Grundkörpers der Schnecke aufgeschmolzen und mit demselben derart auf den Grundkörper aufgebracht wird, daß mindestens der äußere Bereich des Grundkörpers in schmelzflüssigen Zustand gebracht wird.

Mit diesem Verfahren ist es entgegen der aus der DE-PS 37 18 779 entnehmbaren Meinung der Fachwelt möglich, ein mindestens 71 % Molybdän enthaltendes Material auf einen metallischen Grundkörper so aufzutragen, daß sich eine porenfreie Schicht mit einer Haftfestigkeit ergibt, die mindestens der Festigkeit des Beschichtungsmaterials entspricht. Es hat sich in der Praxis herausgestellt, daß das mit diesem Verfahren aufgebrachte Beschichtungsmaterial sich auch bei extremen Belastungen nicht mehr vom Grundkörper löst. Diese überraschende Tatsache wird durch die richtige Kombination des Laserstrahls mit der Art der Zuführung des Beschichtungsmaterials beim Verbinden von Beschichtungs- und Grundmaterial in einem einstufigen Verfahren erreicht. Das Beschichtungsmaterial und die Oberfläche des Grundkörpers werden mit diesem Verfahren zeitlich und räumlich getrennt voneinander aufgeschmolzen. Da die Schmelztemperatur des aus Stahl bestehenden Grundkörpers niedriger ist als die des Beschichtungsmaterials, wird die Oberfläche des Grundkörpers beim Auftreffen des geschmolzenen Beschichtungsmaterials mit dem Laserstrahl auf- bzw. angeschmolzen. Zumindest in der Übergangszone vom Beschichtungsmaterial zum Material des Grundkörpers entsteht damit durch Diffusion ein schmelzmetallurgischer Verbund aus beiden Materialien. In den Grundkörper wird bei diesem Verfahren nur wenig Wärmeenergie eingetragen, so daß nur eine relativ dünne Schicht an der Oberfläche desselben erwärmt wird. Die Gefahr eines Verzuges desselben mit Rißbildung ist daher ausgeschlossen. Beim Einsatz dieses Verfahrens ergibt sich der weitere Vorteil, daß der Aufwand für die Vorbereitung der zu beschichtenden Oberflächen des Grundkörpers sehr gering gehalten werden kann. Auf die Anbringung von Vertiefungen in der zu beschichtenden Oberfläche des Grundkörpers kann ebenso verzichtet werden wie auf ein Strahlen derselben. Das Verfahren eignet sich daher auch für die Behandlung von Bauteilen mit komplizierter Geometrie sowie zur selektiven Behandlung von Bauteilen.

Vorteilhafte Ausgestaltungen der Erfindung gehen aus den Unteransprüchen hervor.

Das Verfahren nach der Erfindung wird anhand der Zeichnungen beispielsweise erläutert.

Es zeigen:
Fig. 1 einen Ausschnitt aus einem Extruder mit Gehäuse und Schnecke.
Fig. 2 einen mit dem Verfahren nach der Erfindung zu beschichtenden Teil der Schnecke teilweise im Schnitt.
Fig. 3 bis 7 unterschiedliche Ansichten eines Schneckensteges bei der Durchführung des Verfahrens.

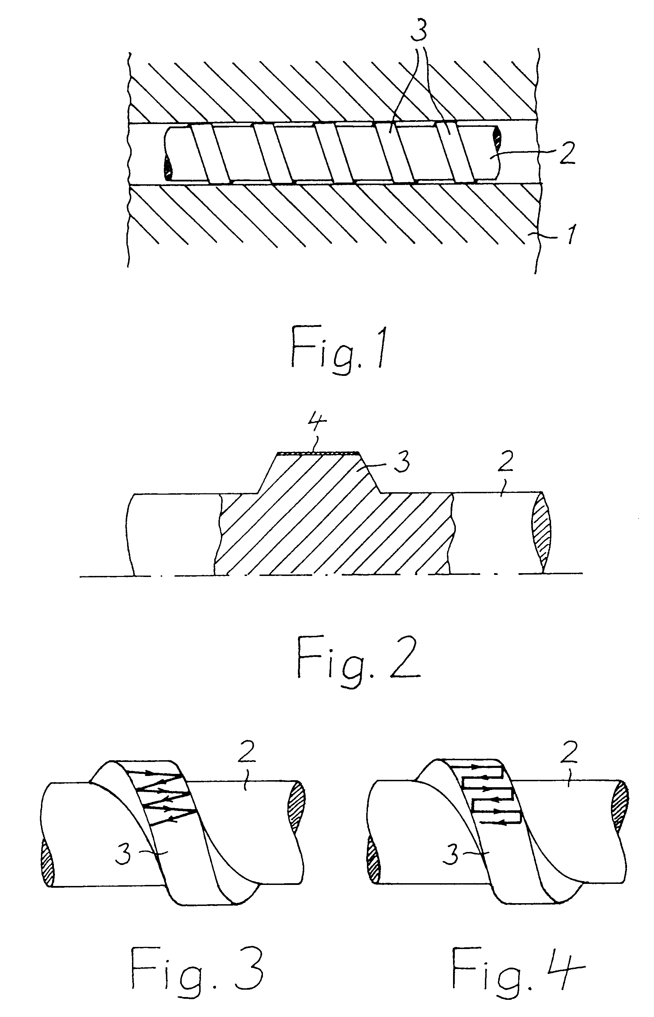

In dem Gehäuse 1 eines Extruders ist eine aus Stahl bestehende Schnecke 2 mit Stegen 3 angeordnet, deren am Gehäuse 1 anliegende Oberflächen mit verschleißminderndem Material beschichtet sind. Eine solche aus unlegiertem Molybdän oder einer Molybdänlegierung mit mindestens 71 % Molydbän bestehende Schicht 4 geht aus der vergrößerten Darstellung in Fig. 2 hervor. Sie wird mittels eines Laserstrahls mit dem Grundkörper der Schnecke 2 verbunden. Dazu wird ein Verfahren verwendet, wie es grundsätzlich aus der DE-Z "Laser-Praxis", Oktober 1990, Seiten LS 101 bis LS 106 hervorgeht. Für das Reparaturbeschichten von Turbinenschaufeln werden hier hochfeste Nickelbasislegierungen mit einem Molydängehalt von bis zu 6 % oder Kobaltbasislegierungen ohne Molybdänzusatz verwendet.

Das Verfahren nach der Erfindung wird beispielsweise wie folgt durchgeführt:
Das Molybdän enthaltende oder aus Molybdän bestehende Beschichtungsmaterial liegt beispielsweise in Form eines agglomerierten Pulvers vor. Es könnte auch in Form von Draht, als flüssige Schmelze oder als vorgewärmte Masse eingesetzt werden.

Als Laser sind alle Laser mit ausreichender Leistung einsetzbar, wie z. B. CO-, CO₂- Nd-YAG- und Nd-Glas-Laser im kontinuierlichem wie auch im Impulsbetrieb. Zur Optimierung der Effektivität der Beschichtung und der Schichteigenschaften ist die Kombination mehrerer Laser gleicher oder unterschiedlicher Typen möglich. Eine solche als Mehrstrahltechnik zu bezeichnende Verfahrensweise ist bei Verwendung von Lasern ausreichender Leistung auch durch Strahlspaltung (Beamsplitting) realisierbar. Vorzugsweise kommt ein CO₂-Laser im Dauerstrichbetrieb zum Einsatz.

Das Beschichtungsmaterial wird dem Laserstrahl beispielsweise mit einem Pulverförderer zugeführt. Die Leistung der Einrichtung zur Zuführung des Beschichtungsmaterials bestimmt wesentlich die Auftreffgeschwindigkeit desselben auf die zu beschichtende Oberfläche. Sie wird der Laserleistung angepaßt. Die Energie des Laserstrahls muß ausreichen, um das Beschichtungsmaterial auf dem Weg zum zu beschichtenden Grundkörper der Schnecke 2 zu schmelzen. Da die Schmelztemperatur des aus Stahl bestehenden Grundkörpers niedriger ist als die des Beschichtungsmaterials, wird die Oberfläche des Grundkörpers beim Auftreffen des bereits geschmolzenen Beschichtungsmaterials mit dem Laserstrahl auf- bzw. angeschmolzen. Dadurch ergibt sich ein schmelzmetallurgischer Verbund zwischen beiden Materialien ohne großen Wärmeeintrag in den Grundkörper der Schnecke 2. Eigenspannungszustände mit Verzug und Rißbildung im beschichteten Grundkörper können daher nicht auftreten.

Durch Beeinflussung des Laserstrahls durch Strahlformung- und -führung, beispielsweise durch oszillierende Optiken, Facettenspiegel, Blenden, Beamsplitting usw., sind verschiedene punkt- und strichförmige Beschichtungsmuster sowie flächenhafte Beschichtungen des Steges 3 mit Strahlquerschnitten möglich, die vom kreisförmigen Strahlquerschnitt des Grundmodes mit gaußförmiger Leistungsverteilung abweichen. Allen gemeinsam ist die Beschichtung der Stege 3 der Schnecke 2 unter Berücksichtigung ihrer Steigung.

Der vorzugsweise verwendete Grundmodestrahl des CO₂-Lasers erzeugt Schichtspuren auf der Oberfläche der zu beschichtenden Stege 3 der Schnecke 2, deren Breiten im wesentlichen von der Laserleistung und dem Strahlfleckdurchmesser abhängen. Sie sind in der Regel um ein Mehrfaches kleiner als die Breite der Stege 3. Der Laserstrahl muß in diesem Fall über die ganze Breite und die Länge der Stege 3 bewegt werden. Das geschieht zweckmäßig nach einem aus einer translatorischen Komponente und einer Rotationskomponente der Relativbewegung des Laserstrahls gegenüber der zu beschichtende Oberfläche bestehenden Muster. Dabei können beide Komponenten durch den Laserstrahl oder durch die zu beschichtende Schnecke 2 beeinflußt werden. Sinnvoll ist eine Verteilung der Bewegungskomponenten auf den Laserstrahl und die Schnecke 2.

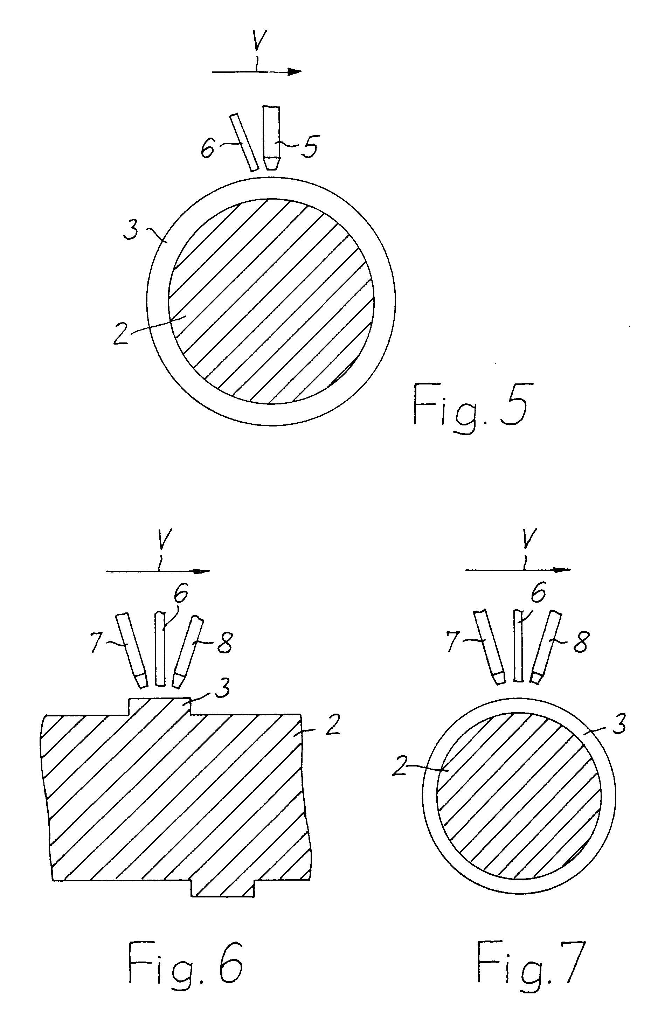

Ein solches Muster ist beispielsweise ein aus Fig. 3 ersichtliches Zick-Zack-Muster, nach welchem der Laserstrahl unter Berücksichtigung der Steigung des Steges 3 kontinuierlich zwischen den Stegkanten translatorisch hin- und herbewegt wird, während sich gleichzeitig die Schnecke 2 kontinuierlich um ihre Achse dreht (Rotationskomponente). Die Umfangsgeschwindigkeit der Schnecke 2 bestimmt den Überlappungsgrad der so erzeugten Schichtspuren. Ein anderes leicht zu erzeugendes Muster ist ein in Fig. 4 dargestelltes Mäander-Muster, bei welchem der Laserstrahl unter Berücksichtigung der Steigung des Steges 3 translatorisch zwischen den Stegkanten diskontinuierlich mit einer Verweilzeit an den Stegkanten bewegt wird. Innerhalb dieser Verweilzeiten dreht sich die Schnecke 2 um bestimmte, den Überlappungsgrad bestimmende Winkel um ihre Achse (diskontinuierliche Rotationskomponente).

Der Auftreffwinkel des Beschichtungsmaterials auf den Steg 3, der Winkel zwischen Laserstrahl und Zufuhreinrichtung des Beschichtungsmaterials und die Anordnung von Laserstrahl und Zufuhreinrichtung bezüglich der Achse der Schnecke 2 sind frei wählbar. In bevorzugter Ausführungsform werden Laserstrahl 5 und Zufuhreinrichtung 6 so angeordnet, wie es aus Fig. 5 hervorgeht. Dabei trifft der Laserstrahl den Steg 3 der Schnecke 2 vorzugsweise senkrecht von oben. Das Beschichtungsmaterial wird mittels der Zufuhreinrichtung 6 beispielsweise unter einem Winkel von 18° in Richtung des durch die Drehbewegung der Schnecke 2 erzeugten, durch den Pfeil V angedeuteten Vorschubs gesehen von hinten in den Laserstrahl 5 injiziert.

Der Laserstrahl 5 kann gemäß Fig. 6 und 7 auch in zwei Laserstrahlen 7 und 8 gesplittet werden. Dabei ist die Anordnung Laserstrahl 7 - Zufuhreinrichtung 6 - Laserstrahl 8 in Fig. 6 in Richtung der Achse der Schnecke 2 dargestellt, während Fig. 7 diese Anordnung quer zur Achse der Schnecke 2 zeigt. Es ist zweckmäßig, die Winkel der beiden Laserstrahlen 7 und 8 zur Oberflächennormalen des Steges 3 unterschiedlich zu gestalten, um die Laserbearbeitungsköpfe vor zu hoher Wärmebelastung zu schützen. Auch hier treffen die Laserstrahlen 7 und 8 den Steg 3 vorzugsweise senkrecht von oben. Statt eines Lasers mit gesplittetem Laserstrahl könnten auch zwei getrennte Laser eingesetzt werden.

Die Qualität der Beschichtung und die Dicke der Übergangszone zwischen der aufgebrachten Schicht 4 und dem Grundkörper und damit deren Legierungsgrad lassen sich durch die Behandlungsparameter optimieren. Ein Behandlungsparameter ist beispielsweise die Pulvermasse pro Zeiteinneit, die sogenannte Pulverrate des in den Laserstrahl eingebrachten Beschichtungmaterials. Auch die Bewegungsgeschwindigkeit des Laserstrahls bezüglich der zu beschichtenden Oberfläche (aus translatorischer und Rotationskomponente zusammengesetzte Geschwindigkeit) ist im Zusammenhang mit der Laserleistung als Behandlungsparameter von Bedeutung. Die auf der Oberfläche der Stege 3 erzeugten Schichten 4 sind poren- und rißfrei. Das kann durch die Verwendung von Schutzgasen, vorzugsweise Argon, unterstützt werden. Die Adhäsion der Schicht 4 mit dem Grundkörper der Schnecke 2 ist aufgrund des schmelzmetallurgischen Verbundes mindestens gleich der Kohäsion in der Schicht 4. Die Schicht 4 braucht nur wenig durch Schleifen nachbearbeitet zu werden.

Im folgenden werden noch zwei Beispiele für ein bei dem Verfahren nach der Erfindung einsetzbares Beschichtungsmaterial angegeben:

### Beispiel 1

Es wird unlegiertes Molybdän mit einer Schmelztemperatur von 2620 °C als Beschichtungsmaterial verwendet. Das Molybdän wird beispielsweise in Form eines agglomerierten Pulvers mit einer Korngröße von 45 bis 90 µm verwendet. Es wird - wie oben geschildert - im Laserstrahl aufgeschmolzen und mit demselben der zu beschichtenden Schnecke zugeführt.

### Beispiel 2

Als Beschichtungsmaterial wird eine Molybdänlegierung mit folgenden Bestandteilen eingesetzt:

| | |
|---|---|
| 75 % | Mo |
| 3,5 % | Cr |
| 2,0 % | B |
| 2,5 % | Si |
| Rest | Ni. |

Aus dieser Legierung wird beispielsweise durch Gasverdüsung ein Pulver mit einer Korngröße von 45 bis 90 µm hergestellt. Die Aufbringung auf die Schnecke 2 erfolgt wie oben geschildert.

## Patentansprüche

1. Verfahren zur Erzeugung einer verschleißmindernden Schicht auf der Oberfläche einer in einer Plastifiziervorrichtung einsetzbaren Schnecke, mit welchem auf den aus Stahl bestehenden Grundkörper der Schnecke ein aus Molybdän bestehendes oder Molybdän enthaltendes Beschichtungsmaterial aufgetragen und unter Wärmeeinwirkung fest mit demselben verbunden wird und mit welchem die beschichtete Schnecke anschließend abgekühlt wird, dadurch gekennzeichnet, daß das mindestens 71 % Molybdän enthaltende Beschichtungsmaterial in einen Laserstrahl (5,7,8) eingebracht, in demselben zeitlich und räumlich getrennt vom Material des Grundkörpers der Schnecke (2) aufgeschmolzen und mit demselben derart auf den Grundkörper aufgebracht wird, daß mindestens der äußere Bereich des Grundkörpers in schmelzflüssigen Zustand gebracht wird.

2. Verfahren nach Anspruch 1, dadurch gekennzeichnet, daß Laserstrahl (5,7,8) und eine Zufuhreinrichtung (6) für das Beschichtungsmaterial unter einem spitzen Winkel zueinander angeordnet werden.

3. Verfahren nach Anspruch 1 oder 2, dadurch gekennzeichnet, daß der Laserstrahl (5) in Teilstrahlen aufgesplittet wird.

4. Verfahren nach einem der Ansprüche 1 bis 3, dadurch gekennzeichnet, daß das Beschichtungsmaterial bezogen auf den durch die Drehung der Schnecke (2) bedingten Vorschub derselben von hinten in den Laserstrahl (5,7,8) injiziert wird.

5. Verfahren nach einem der Ansprüche 1 bis 4, dadurch gekennzeichnet, daß die Beschichtung der Oberfläche des Grundkörpers mit zick-zack-förmigem Verlauf des Laserstrahls (5,7,8) durchgeführt wird.

6. Verfahren nach einem der Ansprüche 1 bis 4, dadurch gekennzeichnet, daß die Beschichtung der Oberfläche des Grundkörpers mit mäanderförmigem Verlauf des Laserstrahls (5,7,8) durchgeführt wird.

## Claims

1. Method for producing a wear-reducing layer on the surface of a screw which can be used in a plasticizing device, by which a coating material consisting of or containing molybdenum is applied to the base body, which consists of steel, of the screw and firmly joined to this body under the effect of heat, and by which the coated screw is subsequently cooled, characterised in that the coating material, which contains at least 71% of molybdenum, is introduced into a laser beam (5, 7, 8), melted in the latter separately from the material of the base body of the screw (2) in terms of time and space and applied with this beam to the base body such that at least the outer region of the base body is brought into a molten state.

2. Method according to claim 1, characterised in that the laser beam (5, 7, 8) and a feed device (6) for the coating material are arranged at an acute angle to one another.

3. Method according to claim 1 or 2, characterised in that the laser beam (5) is split into partial beams.

4. Method according to any one of claims 1 to 3, characterised in that the coating material is injected into the laser beam (5, 7, 8) from the rear, related to the feed of the screw (2) resulting from its rotation.

5. Method according to any one of claims 1 to 4, characterised in that the surface of the base body is coated by the laser beam (5, 7, 8) describing a zigzag path.

6. Method according to any one of claims 1 to 4, characterised in that the surface of the base body is coated by the laser beam (5, 7, 8) describing a meandering path.

## Revendications

1. Procédé pour la production d'une couche anti-usure sur la surface d'une vis sans fin utilisée dans un dispositif à plastifier avec lequel il est déposé, sur le corps de base de la vis composée d'acier une matière de revêtement en molybdène ou contenant du molybdène qui, sous l'action de la chaleur, est reliée fermement à ce dernier, la vis une fois enduite étant ensuite refroidie, caractérisé en ce que la matière du revêtement contenant au moins 71 % de molybdène est introduite dans un rayon laser (5, 7, 8), est fondue dans ce dernier et, ce, séparément de la matière du corps de base de la vis sans fin (2) dans le temps et dans l'espace et est appliquée sur le corps de base par ce dernier jusqu'à ce qu'au moins la zone externe du corps de base soit amenée à l'état liquide de fusion.

2. Procédé selon la revendication 1, caractérisé en ce que le rayon laser (5, 7, 8) et un dispositif d'amenée (6) de la matière du revêtement sont disposés de manière à former un angle aigu l'un par rapport à l'autre.

3. Procédé selon la revendication 1 ou 2, caractérisé en ce que le rayon laser (5) est splitté en rayons partiels.

4. Procédé selon l'une des revendications 1 à 3, caractérisé en ce que la matière du revêtement est injectée par l'arrière dans le rayon laser (5, 7, 8) par rapport à l'avance de ce dernier, laquelle est conditionnée par la rotation de la vis sans fin (2).

5. Procédé selon l'une des revendications 1 à 4, caractérisé en ce que le dépôt de la couche sur la surface du corps de base est réalisé en suivant une trajectoire en zigzag du rayon laser (5, 7, 8).

6. Procédé selon l'une des revendications 1 à 4, caractérisé en ce que le dépôt de la couche sur la surface du corps de base est réalisé en suivant une trajectoire en méandre du rayon laser (5, 7, 8).
